# EUROPÄISCHE PATENTSCHRIFT

(11) **EP 2 344 752 B1**
(45) Veröffentlichungstag und Bekanntmachung des Hinweises auf die Patenterteilung: **11.12.2013**
(21) Anmeldenummer: 09736861.7
(22) Anmeldetag: 16.10.2009
(51) Int. Cl.: F03D 1/00, F03D 11/00

(54) **VERFAHREN ZUM TRANSPORT EINES ROTORBLATTS EINER WINDENERGIEANLAGE UND TRANSPORTVORRICHTUNG ZUR DURCHFÜHRUNG DES VERFAHRENS**
METHOD FOR TRANSPORTING A ROTOR BLADE OF A WIND POWER PLANT AND TRANSPORT DEVICE FOR CONDUCTING THE METHOD
PROCÉDÉ DE TRANSPORT D'UNE PALE DE ROTOR D'UN AÉROGÉNÉRATEUR ET DISPOSITIF DE TRANSPORT POUR LA MISE EN OEUVRE DU PROCÉDÉ

(30) Priorität: 27.10.2008 DE 102008053404
(43) Veröffentlichungstag der Anmeldung: 20.07.2011
(73) Patentinhaber: STRABAG Offshore Wind GmbH, 27472 Cuxhaven (DE)
(72) Erfinder: WEBER, Klaus, 72366 Balingen (DE)
(74) Vertreter: Riedel, Peter
(86) Internationale Anmeldenummer: PCT/EP2009/007442
(87) Internationale Veröffentlichungsnummer: WO 2010/049069

(56) Entgegenhaltungen:
- EP-A1- 1 925 583
- WO-A1-00/17086
- US-A1- 2005 019 166

## Beschreibung

Die Erfindung betrifft ein Verfahren zum Transport eines Rotorblatts zu einer Nabe des Rotors einer Windenergieanlage sowie eine Transportvorrichtung zur Durchführung eines solchen Verfahrens.

Zur Montage von Rotorblättern an einer Windenergieanlage werden häufig Kräne eingesetzt, die ein Rotorblatt aufnehmen und es so weit anheben, dass der Fuß des Rotorblatts mit einer entsprechenden Aufnahme der Nabe des Rotors verbunden werden kann. Allerdings ist es schwierig, das an einem Seil hängende Rotorblatt exakt zu positionieren, was dazu führt, dass die zur Befestigung notwendigen Bolzen erst nach mehrfachen Versuchen und entsprechend langem Zeitaufwand in die Befestigungsbohrungen eingebracht werden können und die Befestigung an der Nabe erfolgt. Besonders problematisch ist ein solches Verfahren bei größeren Windstärken, wie sie insbesondere in Küstennähe oder im Offshore-Bereich häufig auftreten.

In der DE 101 11 523 A1 ist eine transportable Arbeitsvorrichtung mit Hebegerät für Arbeiten an einer Windkraftanlage beschrieben. Das Hebegerät wird mittels einer ein Seil aufweisenden Aufzugvorrichtung zum oberen Ende des Mastes der Windkraftanlage befördert und mittels einer Halterung am Mast befestigt. Das Hebegerät verfügt über eine Arbeitseinheit mit einer Seilwinde, wobei das Seil zum Boden absenkbar oder zur Mastspitze anhebbar ist. Mit dieser Einrichtung wird die Nabe komplett mit allen drei Rotorblättern abgelassen, so dass diese erst am Boden von der Nabe getrennt werden. Eine solche Arbeitsvorrichtung für ein Verfahren zum Absenken bzw. Anheben kompletter Rotoren ist nur bei kleineren Windkraftanlagen einsetzbar.

Die US 2005/0019166 A1 beschreibt ein Verfahren zur Handhabung von Rotorblättern für Windturbinen. Dabei wird an einem Rotorblatt eine aus einem Joch gebildete Greifeinheit befestigt, die dann mit dem Rotorblatt von einem Kran angehoben wird. Durch das Aufwickeln des Kranseils wird die Greifeinheit vertikal so weit nach oben bewegt, bis der Rotorblattfuß an die Nabe des Rotors gelangt. Dann erfolgt die Befestigung des Rotorblatts an der Nabe. Schließlich kann die Greifeinheit vom Rotorblatt gelöst und wieder herabgelassen werden.

Die EP 1 925 583 A1 beschreibt ein Verfahren zur Handhabung eines Rotorblatts einer Windturbine mittels eines Krans. Hierzu wird an dem Rotorblatt ein Heberahmen befestigt, wobei dieser Rahmen eine formsteife Traverse bildet, die an zwei Positionen bezüglich der Länge des Rotorblatts an diesem befestigt wird.

Aus der DE 103 03 555 A1 ist ein Verfahren zur kranlosen Montage oder Demontage eines Rotorblattes an einem Rotorblattanschluss an einer Nabe eines Rotors einer Windenergieanlage bekannt. Dabei wird zwischen einem Teil im Nabenbereich der Windenergieanlage und dem Bodenbereich wenigstens ein Seil gespannt, welches eine Durchlaufwinde aufnimmt, die ihrerseits mit dem nabenseitigen Anschluss des Rotorblatts lösbar verbunden wird. Bei Betrieb der Durchlaufwinde wird diese zusammen mit dem Rotorblatt entlang des Pfeils nach oben oder nach unten bewegt. Das Rotorblatt wird an der Nabe mittels Schraubbolzen befestigt.

Der Erfindung liegt die Aufgabe zugrunde, ein Verfahren zum Transport eines Rotorblatts einer Windenergieanlage zu schaffen, mit dem auf einfache Weise das Rotorblatt sicher in die zum Anbau an eine Nabe eines Rotors erforderliche Position befördert wird. Außerdem besteht die Aufgabe darin, eine Transportvorrichtung zur Durchführung des Verfahrens anzugeben.

Diese Aufgabe wird hinsichtlich des Verfahrens durch die Kombination der Merkmale des Anspruchs 1 und hinsichtlich der Transportvorrichtung durch die Kombination der Merkmale des Anspruchs 5 gelöst.

Durch die Aufnahme des Rotorblatts an einer formsteifen Traverse ist das Rotorblatt leichter zu manövrieren als an Seilen, wie dies bisher üblich ist. Die Befestigungsmittel sorgen für einen sicheren, rutschfreien Halt und so kann das Rotorblatt genau ausgerichtet werden. Es ist eine Tragvorrichtung vorgesehen, an der die Traverse gehalten und mittels einer Stellvorrichtung relativ zur Tragvorrichtung bewegbar ist, wobei die Traverse mittels einer Stellvorrichtung derart bewegt wird, dass der Rotorblattfuß zum Flanschanschluss hin ausgerichtet und an diesem angelegt wird, und dass die Traverse mit Saugfüßen als Befestigungsmittel an einer Fläche des Rotorblatts angelegt und dann ein Vakuum in den Saugfüßen erzeugt, und dadurch das Rotorblatt an der Traverse kraftschlüssig befestigt wird. Das Lösen der Befestigungsmittel vom Rotorblatt erfolgt dadurch, dass die Saugfüße belüftet werden.

Zweckmäßigerweise erfolgt das Bewegen und Ausrichten dreidimensional. Darüber hinaus ist es von Vorteil, dass die Traverse an einem Turmlift befestigt und von diesem in Vertikalrichtung transportiert wird. Ein solcher Turmlift ist insbesondere bei Windenergieanlagen im Offshore-Bereich von Vorteil, um die Einflüsse des Seegangs während der Montage des Rotorblatts zu vermeiden. Darüber hinaus ist es von Vorteil, dass die Traverse mit dem Rotorblatt um eine orthogonal zu einer Längsachse des Mastes verlaufende Achse um etwa 90° gedreht wird. Dadurch ist es möglich, die Traverse und das Rotorblatt in einer horizontalen Lage an dem Turmlift zu befestigen und in einer ausreichenden Höhe über dem Boden bzw. Meeresspiegel die Traverse mit dem Rotorblatt so zu drehen, dass der Rotorblattfuß zur Nabe des Rotors hin gerichtet ist.

Die Transportvorrichtung ist mit einer Tragvorrichtung, an der die Traverse gehalten wird, versehen. Eine solche Tragvorrichtung kann beispielsweise von einem Turmlift, einem Kran oder einer Drehleiter aufgenommen werden. Darüber hinaus ist zwischen der Tragvorrichtung und der Traverse eine Stellvorrichtung vorgesehen, durch die die Traverse relativ zur Tragvorrichtung bewegbar ist.

Gemäß der Ausgestaltung der Transportvorrichtung sind als Befestigungsmittel Saugfüße vorgesehen, die über eine Saugleitung mit einer Unterdruckquelle verbunden sind und Ventilmittel zur bedarfsweisen Steuerung des Unterdrucks aufweisen. Die Saugfüße können schwenkbar gelagert sein. Zweckmäßigerweise ist die Unterdruckquelle eine Vakuumpumpe. Dadurch kann der Unterdruck auf einfache Weise ständig auf einem ausreichenden Niveau gehalten werden.

Als alternative Befestigungsmittel kommen elastische Klemmen oder selbstfestziehende Schlaufen in Betracht. Vorteilhaft ist eine Gestaltung der Traverse aus einem Rahmen und innerhalb von diesem verlaufenden Streben. Dadurch kann die Formsteifigkeit bei niedrigem Gewicht der Traverse erreicht werden.

Die Stellvorrichtung umfasst vorzugsweise drei Hydraulikzylinder, deren Kolbenstangen gelenkig an der Traverse und deren Zylindergehäuse schwenkbar an der Tragvorrichtung gelagert sind.

In weiterer Ausgestaltung der Transportvorrichtung ist vorgesehen, dass in der Tragvorrichtung Steuergeräte zur Steuerung der Stellvorrichtung angeordnet sind. Darüber hinaus ist es vorteilhaft, dass die Tragvorrichtung zur Verbindung mit einem Turmlift ausgebildet ist und ein Lager enthält, um dessen Drehachse die Tragvorrichtung mit der Traverse schwenkbar ist.

Ein Ausführungsbeispiel der Erfindung ist nachstehend anhand der Zeichnungen näher erläutert. In der Zeichnung zeigt:
- Fig. 1: den Grundriss eines Rotorblatts mit einer formsteifen Traverse mit Vakuumhebern als Transportvorrichtung,
- Fig. 2: die Draufsicht auf die Anordnung gemäß Pfeil II in Fig. 1,
- Fig. 3: die Aufnahme der Transportvorrichtung und des Rotorblatts gemäß Fig. 2 an einem Turmlift eines Mastes einer Windenergieanlage,
- Fig. 4: die Transportvorrichtung am Turmlift mit in die Vertikale gedrehtem Rotorblatt,
- Fig. 5: die am Mast der Windenergieanlage hochgefahrene Transportvorrichtung mit Rotorblatt,
- Fig. 6: die Transportvorrichtung mit Rotorblatt in der an einen Flanschanschluss der Nabe angefahrenen Stellung des Rotorblattfußes.

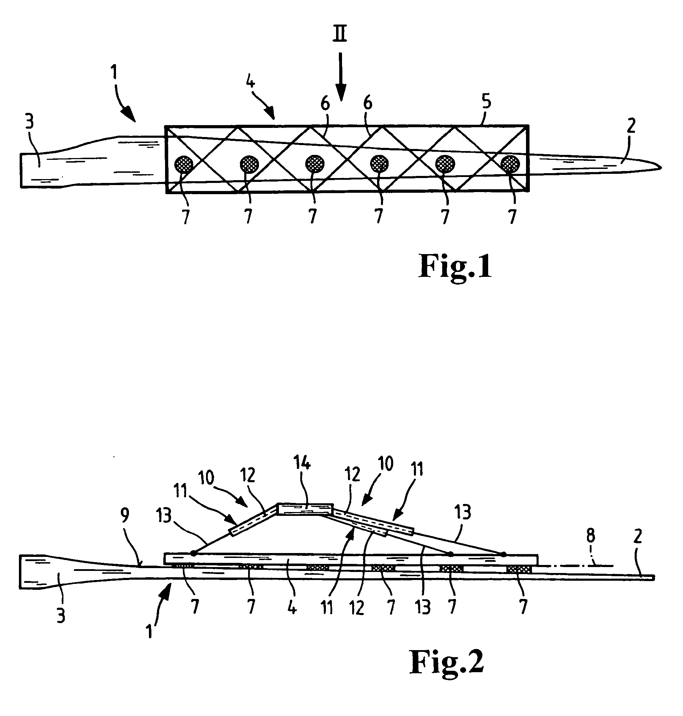

In Fig. 1 ist der Grundriss eines Rotorblatts 1 gezeigt, das an einem Ende eine Rotorblattspitze 2 und am anderen Ende einen Rotorblattfuß 3 aufweist. Hinter dem Rotorblatt 1 befindet sich eine formstabile Traverse 4, die beispielsweise aus einem rechteckigen Rahmen 5 und innerhalb von diesem verlaufenden Streben 6 besteht. Eine solche Gestaltung führt zu einer Traverse 4 mit geringem Eigengewicht. An der Traverse 4 sind über deren Länge verteilt mehrere Saugfüße 7 vorgesehen, die bei Anlegen der Traverse 4 an einer Fläche des Rotorblatts 1 dort zur dichtenden Anlage kommen. Die Saugfüße 7 können schwenkbar an der Traverse gelagert sein.

Die Fig. 2 zeigt eine Draufsicht auf die Anordnung gemäß Pfeil II in Fig. 1, woraus ersichtlich ist, dass die Saugfüße 7 vor einer Traversenebene 8 etwas vorstehen, so dass die Saugfüße 7 an einer Fläche 9 des Rotorblatts 1 zur Anlage kommen, wenn die Traversenebene 8 zu der Fläche 9 noch einen geringen Abstand hat. Dieser Abstand ist ausreichend, um schädliche Einwirkungen der Traverse 4 auf das Rotorblatt 1 insbesondere ein Schaben oder Kratzen zu vermeiden. Eine schwenkbare Lagerung der Saugfüße 7 hat den Vorteil, dass sich die Saugfüße 7 an die Geometrie des Rotorblatts anpassen können. An einer dem Rotorblatt 1 abgewandten Seite der Traverse 4 ist eine Stellvorrichtung 10 vorgesehen, die im gezeigten Ausführungsbeispiel drei Hydraulikzylinder 11 umfasst, deren Zylindergehäuse 12 schwenkbar an einer Tragvorrichtung 14 gelagert und deren Kolbenstangen 13 gelenkig an der Traverse 4 angebracht sind. Die Anlenkpunkte der Kolbenstangen 13 an der Traverse 4 sind so bestimmt, dass durch Steuerung der Hydraulikzylinder 11 eine dreidimensionale Bewegung der Traverse 4 und somit auch des Rotorblatts 1 bezogen auf die Tragvorrichtung 14 gegeben ist. Ebenfalls in der Tragvorrichtung 14 kann eine Vakuumpumpe als Unterdruckquelle vorgesehen sein, die unter Zwischenschaltung von Ventilen mit den Saugfüßen 7 verbunden ist.

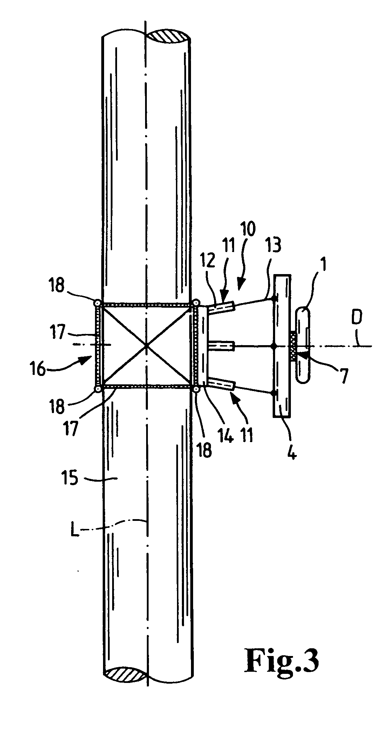

In Fig. 3 ist ein Ausschnitt eines Mastes 15 einer Windenergieanlage gezeigt mit einem Turmlift 16. Der Turmlift 16 umfasst ein den Mast 15 umgebendes Gestell 17 mit Rollen 18, die sich am Mast 15 abstützen. An dem Turmlift 16 ist die Tragvorrichtung 14 angebracht, welche über die Stellvorrichtung 10, nämlich die drei Hydraulikzylinder 11, die Traverse 4 mit dem Rotorblatt 1 trägt. Zwischen der Traverse 4 und dem Rotorblatt 1 ist der Saugfuß 7 zu sehen. Die Tragvorrichtung 14 oder der Turmlift 16 verfügt über ein Lager, so dass die Tragvorrichtung 14 mit Traverse 4 und Rotorblatt 1 gegenüber dem Turmlift 16 um eine orthogonal zu einer Längsachse L des Mastes 15 verlaufende Drehachse D gedreht werden kann. Hierzu muss sich der Turmlift 16 in einer ausreichenden Höhe über dem Boden oder Meeresspiegel befinden, um eine Berührung des Rotorblatts 1 mit dem Boden oder Wasser zu vermeiden.

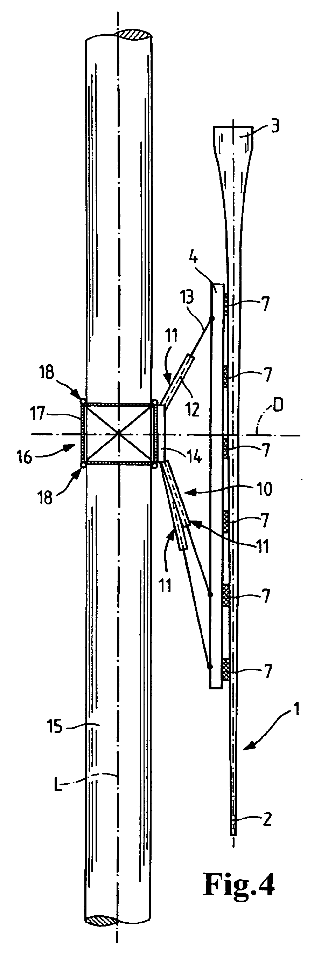

Die Fig. 4 zeigt einen Ausschnitt des Mastes 15 mit Turmlift 16 in einer Darstellung der um 90° um die Drehachse D gedrehten Anordnung aus Tragvorrichtung 14, Stellvorrichtung 10, Traverse 4 und Rotorblatt 1. Dabei zeigt die Rotorblattspitze 2 nach unten, und der Rotorblattfuß 3 befindet sich oben. Im Übrigen stimmen die Bezugszeichen für gleiche Teile mit denjenigen der Fig. 3 überein. In dieser vertikalen Ausrichtung wird das Rotorblatt 1 am Mast 15 empor gefahren beziehungsweise im Falle eines Austausches nach unten gefahren.

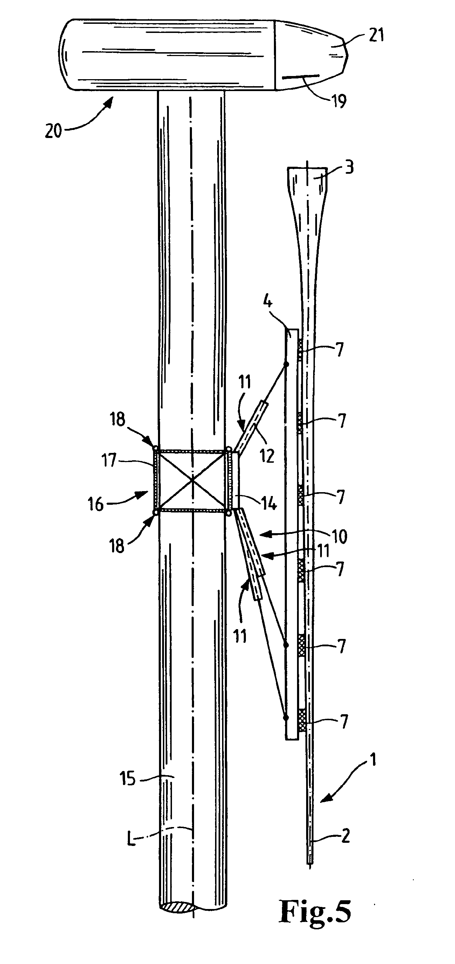

In Fig. 5 ist die am Mast 15 einer Windenergieanlage 20 mittels des Turmlifts 16 hochgefahrene Transportvorrichtung mit Rotorblatt 1 gezeigt, wobei die Transportvorrichtung - wie in den Fig. 1 bis 4 beschrieben - die am Gestell 17 des Turmlifts 16 angebrachte Tragvorrichtung 14 mit den Hydraulikzylindern 11 sowie die Traverse 4 mit den Saugfüßen 7 umfasst. Das Rotorblatt 1 ist mit dem Rotorblattfuß 3 auf eine Nabe 21 der Windenergieanlage 20 gerichtet, um an einem Flanschanschluss 19 befestigt zu werden. Hierzu kann der Turmlift 16 noch etwas weiter nach oben bewegt werden, so dass nur noch der für das justierte Anlenken des Rotorblattfußes 3 notwendige Abstand zum Flanschanschluss 19 gegeben ist.

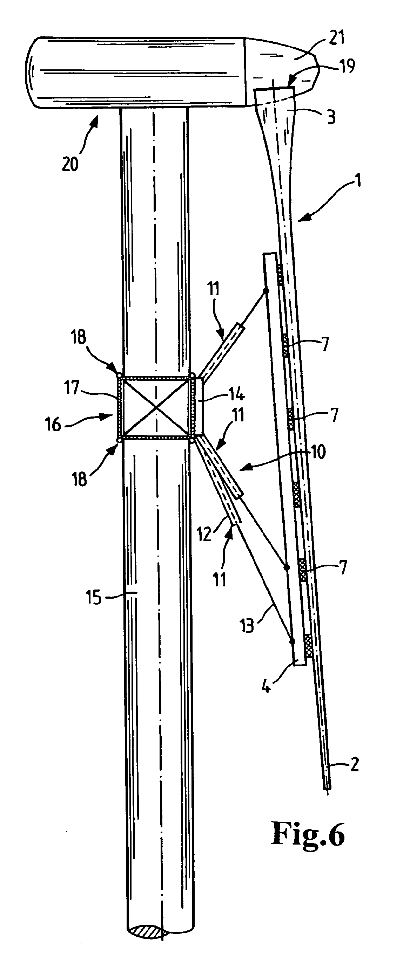

In Fig. 6 ist dargestellt, wie mittels der Hydraulikzylinder 11, die die Stellvorrichtung 10 bilden, die Traverse 4 so bewegt werden kann, dass der Rotorblattfuß 3 exakt an den Flanschanschluss 19 gelangt, was das Einführen der Verbindungselemente zum Befestigen des Rotorblatts 1 an der Nabe 21 ermöglicht. Da die drei Hydraulikzylinder 11 einzeln steuerbar sind, kann in drei Dimensionen jede Position der Traverse 4 und somit auch des Rotorblatts 1 eingestellt werden. Diese exakte Justierung ist mit dieser Transportvorrichtung auch bei ungünstigen Wetterbedingungen möglich, was insbesondere für eine Montage im Offshore-Bereich von Bedeutung ist, da dort die üblichen Windstärken die Montage häufig behindern oder gar ausschließen.

Nach der erfolgten Montage des Rotorblatts 1 an der Nabe 21 werden die Saugfüße 7 belüftet, so dass kein Unterdruck mehr anliegt. Die Traverse 4 wird mittels der Stellvorrichtung 10 in eine Position gebracht, in der ein ausreichender Abstand zum Rotorblatt gegeben ist, so dass anschließend der Turmlift 16 hinabfahren und dann die Transportvorrichtung abgenommen werden kann. Es ist auch möglich, die Traverse so zu gestalten, dass gleichzeitig mehrere Rotorblätter transportiert werden können und nacheinander die Rotorblätter montiert werden.

Selbstverständlich sind auch andere Einrichtungen außer einem Turmlift zum Anheben der Transportvorrichtung in Betracht zu ziehen, beispielsweise Autokrane, Drehleitern etc..

## Patentansprüche

1. Verfahren zum Transport eines Rotorblatts (1) zu einer Nabe (21) eines Rotors einer Windenergieanlage (20), wobei eine formsteife Traverse (4) mit mehreren über die Länge der Traverse (4) verteilt angeordneten Befestigungsmitteln an das Rotorblatt (1) herangeführt und an diesem angelegt und befestigt wird und danach die Traverse (4) mit dem Rotorblatt (1) in eine Position nahe der Nabe (21) des Rotors gebracht und zu einem Anschluss für einen Rotorblattfuß (3) ausgerichtet wird, so dass Verbindungselemente einführbar sind, und das Rotorblatt (1) an dem Anschluss befestigt wird und schließlich die Befestigungsmittel gelöst werden, wodurch die Traverse (4) vom montierten Rotorblatt (1) entnehmbar ist,
wobei eine Tragvorrichtung (14) vorgesehen ist, an der die Traverse (4) gehalten und mittels einer Stellvorrichtung (10) relativ zur Tragvorrichtung (14) bewegbar ist, wobei die Traverse (4) mittels der Stellvorrichtung (10) derart bewegt wird, dass der Rotorblattfuß (3) zum Flanschanschluss (19) hin ausge-richtet und an diesen angelegt wird, und **dadurch gekennzeichnet dass** die Traverse mit Saugfüßen (7) als Befestigungsmittel an einer Fläche des Rotorblattes (1) angelegt und dann ein Vakuum in den Saugfüßen (7) erzeugt und dadurch das Rotorblatt (1) an der Traverse (4) kraftschlüssig befestigt wird und das Lösen der Befestigungsmittel dadurch erfolgt, dass die Saugfüße (7) belüftet werden.

2. Verfahren nach Anspruch 1,
**dadurch gekennzeichnet, dass** das Bewegen und Ausrichten dreidimensional erfolgt.

3. Verfahren nach Anspruch 1 oder 2,
**dadurch gekennzeichnet, dass** die Traverse (4) an einem Turmlift (16) befestigt und von diesem in Vertikalrichtung transportiert wird.

4. Verfahren nach Anspruch 3,
**dadurch gekennzeichnet, dass** die Traverse (4) mit dem Rotorblatt (1) um eine orthogonal zu einer Längsachse (L) eines Mastes (15) verlaufende Achse (D) um etwa 90° gedreht wird.

5. Transportvorrichtung für ein Rotorblatt mit einer formsteifen Traverse (4), die über ihre Länge verteilt mehrere Befestigungsmittel aufweist,
wobei eine Tragvorrichtung (14) vorgesehen ist, an der die Traverse (4) gehalten wird, und dass zwischen der Tragvorrichtung (14) und der Traverse (4) eine Stellvorrichtung (10) vorgesehen ist, durch die die Traverse (4) relativ zur Tragvorrichtung (14) bewegbar ist, und **dadurch gekennzeichnet, dass** als Befestigungsmittel Saugfüße (7) vorgesehen sind, die über eine Saugleitung mit einer Unterdruckquelle verbunden sind und Ventilmittel zur bedarfsweisen Steuerung des Unterdrucks vorgesehen sind.

6. Transportvorrichtung nach Anspruch 5,
**dadurch gekennzeichnet, dass** die Stellvorrichtung (10) drei Hydraulikzylinder (11) umfasst, deren Kolbenstangen (13) gelenkig an der Traverse (4) und deren Zylindergehäuse (12) schwenkbar an der Tragvorrichtung (14) gelagert sind.

7. Transportvorrichtung nach Anspruch 5 oder 6,
**dadurch gekennzeichnet, dass** in der Tragvorrichtung (14) Steuergeräte zur Steuerung der Stellvorrichtung (10) angeordnet sind.

8. Transportvorrichtung nach Anspruch 5,
**dadurch gekennzeichnet, dass** die Unterdruckquelle eine Vakuumpumpe ist.

9. Transportvorrichtung nach einem der Ansprüche 5 bis 8,
**dadurch gekennzeichnet, dass** die Tragvorrichtung (14) zur Verbindung mit einem Turmlift (16) ausgebildet ist und ein Lager enthält, um dessen Drehachse (D) die Tragvorrichtung (14) mit der Traverse (4) drehbar ist.

10. Transportvorrichtung nach Anspruch 5,
**dadurch gekennzeichnet, dass** die Saugfüße (7) schwenkbar sind.

11. Transportvorrichtung nach einem der Ansprüche 5 bis 10,
**dadurch gekennzeichnet, dass** die Traverse (4) aus einem Rahmen (5) und innerhalb von diesem verlaufenden Streben (6) besteht.

## Claims

1. Method for transporting a rotor blade (1) to a hub (21) of a rotor of a wind power plant (20), wherein a rigid cross bar (4) provided with a plurality of fastening means distributed along the length of the cross bar (4) is brought to the rotor blade (1) and applied and secured thereto and the cross bar (4) with the rotor blade (1) is then brought into a position close to the hub (2) of the rotor and aligned for connection to a rotor blade foot (3), so that connecting elements can be inserted, and wherein the rotor blade (1) is secured to the connection and the fastening means are finally released, allowing the cross bar (4) to be removed from the mounted rotor blade (1), wherein a carrying device (14) is provided on which the cross bar (4) is held and movable relative to the carrying device (14) by means of an actuating device (10), the cross bar (4) being moved by the actuating device (10) in such a way that the rotor blade foot (3) is aligned to the flanged connection (19) and applied thereto,
**characterised in that** the cross bar is applied to a surface of the rotor blade (1) using suction feet (7) as fastening means and a vacuum is then generated in the suction feet (7), whereby the rotor blade (1) is non-positively secured to the cross bar (4), and **in that** the fastening means are released by ventilating the suction feet (7).

2. Method according to claim 1,
**characterised in that** the movement and the alignment are carried out in three dimensions.

3. Method according to claim 1 or 2,
**characterised in that** the cross bar (4) is mounted on a tower lift (16) and transported thereby in the vertical direction.

4. Method according to claim 3,
**characterised in that** the cross bar (4) with the rotor blade (1) is rotated by approximately 90 degrees about an axis (D) of a mast (15), which axis (D) is orthogonal to a longitudinal axis (L).

5. Transport device for a rotor blade, comprising a rigid cross bar (4) provided with a plurality of fastening means distributed along its length, wherein a carrying device (14) is provided on which the cross bar (4) is held, and wherein an actuating device (10) by means of which the cross bar (4) is movable relative to the carrying device (14) is provided between the carrying device (14) and the cross bar (4), **characterised in that** the fastening means are represented by suction feet (7) connected to a vacuum source by a suction line, and **in that** valve means are provided for controlling the vacuum as required.

6. Transport device according to claim 5,
**characterised in that** the actuating device (10) comprises three hydraulic cylinders (11), the piston rods (13) of which are hinged to the cross bar (4) and the cylinder housings (12) of which are hinged to the carrying device (14).

7. Transport device according to claim 5 or 6,
**characterised in that** control units are provided in the carrying device (14) for controlling the actuating device (10).

8. Transport device according to claim 5,
**characterised in that** the vacuum source is a vacuum pump.

9. Transport device according to any of claims 5 to 8,
**characterised in that** the carrying device (14) is designed for connection to a tower lift and comprises a bearing about the axis of rotation (D) of which the carrying device (14) with the cross bar (4) is rotatable.

10. Transport device according to claim 5,
**characterised in that** the suction feet (7) are pivotable.

11. Transport device according to any of claims 5 to 10,
**characterised in that** the cross bar (4) consists of a frame (5) and struts (6) extending within the former.

## Revendications

1. Procédé pour transporter une pale de rotor (1) jusqu'à un moyeu (21) d'un rotor d'un aérogénérateur (20), étant précisé qu'une traverse rigide (4) avec plusieurs moyens de fixation répartis sur sa longueur est approchée de la pale de rotor (1) et est appliquée et fixée contre celle-ci, que la traverse (4) avec la pale (1) est ensuite amenée dans une position proche du moyeu (21) du rotor et est dirigée vers un raccordement pour une base de pale (3) de telle sorte que des éléments de liaison puissent être introduits, et que la pale (1) est fixée au raccordement et que les moyens de fixation sont enfin desserrés, moyennant quoi la traverse (4) peut être enlevée de la pale (1) montée, étant précisé qu'il est prévu un dispositif de support (14) sur lequel la traverse (4) est maintenue et est mobile par rapport au dispositif de support (14) grâce à un dispositif de réglage (10), et étant précisé que la traverse (4) est déplacée à l'aide du dispositif de réglage (10) de telle sorte que la base de pale (3) soit dirigée vers le raccordement à bride (19), et est appliquée contre celui-ci,
**caractérisé en ce que** la traverse est appliquée contre une surface de la pale (1) avec des ventouses (7) comme moyens de fixation et un vide est ensuite produit dans les ventouses (7), et la pale (1) est ainsi fixée par force à la traverse (4), et le desserrement des moyens de fixation se fait grâce à la détente des ventouses (7).

2. Procédé selon la revendication 1,
**caractérisé en ce que** le déplacement et l'orientation se font en trois dimensions.

3. Procédé selon la revendication 1 ou 2,
**caractérisé en ce que** la traverse (4) est fixée à un ascenseur de mât (16) et est transportée par celui-ci dans le sens vertical.

4. Procédé selon la revendication 3,
**caractérisé en ce que** la traverse (4) avec la pale (1) est tournée d'environ 90° sur un axe (D) orthogonal par rapport à un axe longitudinal (L) d'un mât (15).

5. Dispositif de transport pour une pale de rotor avec une traverse rigide (4) qui présente, répartis sur sa longueur, plusieurs moyens de fixation, étant précisé qu'il est prévu un dispositif de support (14) sur lequel est maintenue la traverse (4), et qu'il est prévu entre le dispositif de support (14) et la traverse (4) un dispositif de réglage (10) grâce auquel la traverse (4) est mobile par rapport au dispositif de support (14),
**caractérisé en ce qu'**il est prévu comme moyens de fixation des ventouses (7) qui sont reliées à une source de dépression par une conduite d'aspiration, et il est prévu des moyens formant soupape pour commander au besoin la dépression.

6. Dispositif de transport selon la revendication 5,
**caractérisé en ce que** le dispositif de réglage (10) comprend trois vérins hydrauliques (11) dont les tiges de piston (13) sont articulées sur la traverse (4) et dont les enveloppes cylindriques (12) sont montées pivotantes sur le dispositif de support (14).

7. Dispositif de transport selon la revendication 5 ou 6,
**caractérisé en ce que** des appareils de commande pour commander le dispositif de réglage (10) sont disposés dans le dispositif de support (14).

8. Dispositif de transport selon la revendication 5,
**caractérisé en ce que** la source de dépression est constituée par une pompe à vide.

9. Dispositif de transport selon l'une des revendications 5 à 8,
**caractérisé en ce que** le dispositif de support (14) est conçu pour être relié à un ascenseur de mât (16) et contient un palier sur l'axe de rotation (D) duquel le dispositif de support (14) avec la traverse (4) est apte à tourner.

10. Dispositif de transport selon la revendication 5,
**caractérisé en ce que** les ventouses (7) sont aptes à pivoter.

11. Dispositif de transport selon l'une des revendications 5 à 10,
**caractérisé en ce que** la traverse (4) se compose d'un châssis (5) et d'entretoises (6) qui s'étendent à l'intérieur de celui-ci.
